Europäisches Patentamt

European Patent Office

Office européen des brevets

(19)

(11) Publication number: **0 081 781**
A2

(12) **EUROPEAN PATENT APPLICATION**

(21) Application number: 82111256.2

(22) Date of filing: 05.12.82

(51) Int. Cl.³: **B 29 C 17/03,** B 29 D 9/04

(30) Priority: 15.12.81 IT 6862181

(43) Date of publication of application: 22.06.83
Bulletin 83/25

(84) Designated Contracting States: DE FR GB SE

(71) Applicant: LEAR S.n.c. di FOGGINI & C., Strada del
Bottone, 20, I-10043 Orbassano (Province of Torino) (IT)

(72) Inventor: Foggini, Giovanni, Ciso Matteotti 23,
I-10121 Torino (IT)

(74) Representative: Modiano, Guido et al, MODIANO, JOSIF,
PISANTY & STAUB Modiano & Associati Via
Meravigli, 16, I-20123 Milan (IT)

(54) Self-supporting polymeric material, particularly for fabricating motorvehicle interior panels, roof panels and works, manufacturing method therefor, and interior panels and works produced with said material and method.

(57) The material is characterized by a cell structure and at least one continuous surface layer ($f_1$, $f_2$) which carries raised and/or microraised decorative elements simulating coverings in general, and is obtained by subjecting a thermoformable cell sheet (10) to the actions of heat and vacuum in microporous structure molds (20) which form the sheet surface without altering the cell structure.

COMPLETE DOCUMENT

EP 0 081 781 A2

TITLE
see front page

This invention relates to a self-supporting polymeric material, particularly for fabricating motorvehicle interior panels and works, as well as to a method of manufacturing it.

Panels and in general self-supporting interior works have been fabricated heretofore by combining a covering with a support of adequate strength characteristics.

Within this general fabricating technique, many solutions have been brought forth directed, in general, to provide supporting materials exhibiting high mechanical characteristics combined with light weight and good sound and thermal insulation properties.

Specially suitable for such applications have shown to be cardboards of the corrugated type, formed from either pressed materials or polymeric ones, but their use has posed some problems arising from the combination thereof with a covering layer. The covering is, in fact, pressed on after applying a coating of an adhesive, and possibly heat softening the covering material.

It will be readily appreciated that the pressure exerted during the covering application step on both the covering and support, can produce irreversible deformation of the support channels or cells by squeezing, with attendant deterioration of the mechanical characteristics, as well as of the sound and heat insulating properties afforded by the presence of such channels or cells.

Particularly affected by the process is the mechanical strength of the final product, owing to the decreased moment of inertia of the load-bearing section resulting from the squeezed cells.

Accordingly, the task of the present invention is to overcome the mentioned drawbacks. The inventive idea is to provide such a self-supporting polymeric material, particularly for motorvehicle interior panels and works which may be surface patterned, to impart a surface micropattern thereof in such a way as to reproduce the surface texture of a desired covering, thereby obviating for the need of applying such a covering, separately. For the purpose it is advantageous that the material is a cell material of the above indicating type which in addition has the property of heat-formability without altering the cell structure of the basic material.

According to one aspect of the present invention that task is achieved by a self-supporting polymeric material, particularly for fabricating motorvehicle interior panels, roof-panels and works, characterized in that it has a cell structure defined by continuous cells and discontinuous ones, and at least one continuous surface layer formed with raised decorative elements obtained by vacuum thermoforming.

This is accomplished according to the invention by subjecting one or both faces of a polymeric cell thermoformable material sheet to the action of a vacuum in microporous structure moulds capable of reproducing on the material surfaces being treated the surface pattern of a covering (such as imitation hide, or the like) and/or any other decorative raised element.

- 4 -   0081781

An advantageous application of the invention concerns the formation of panels and interior works in general by severing a polypropylene sheet with parallel and continuous cells, as obtained for example by a continuous extrusion process, and subjecting to vacuum forming, in a microporous mould, that surface of the severed piece constituting the panel which is will be left exposed to view such that the appearance of a desired covering can be imparted thereto.

Another advantageous application of the invention concerns the formation of sun visors for motorvehicles from corresponding pieces of said parallel cell polypropylene sheet, by subjecting to surface forming both faces of the piece in a corresponding microporous mould of the double die type.

The microporous mould may be of any conventional type, and in particular one obtained from a mix of aluminum powder and two-component resin, especially epoxy resin.

Further features and advantages will be apparent from the following detailed description, with reference to the accompanying drawings, where:

Figure 1 shows schematically the steps and means for forming a generical element, such as a panel or the like from the inventive material;

Figures 2a, 2b are sectional views taken through alternative cell sheets; and

Figure 3 is a schematical view similar to Figure 1 but showing the steps and means for directly forming a sun visor.

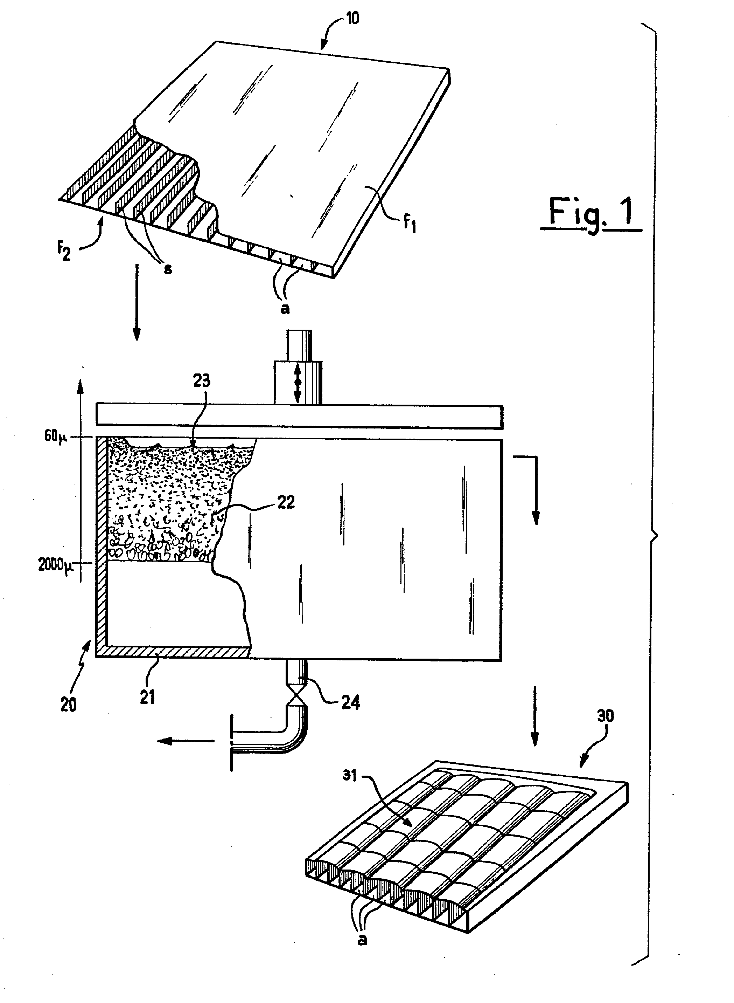

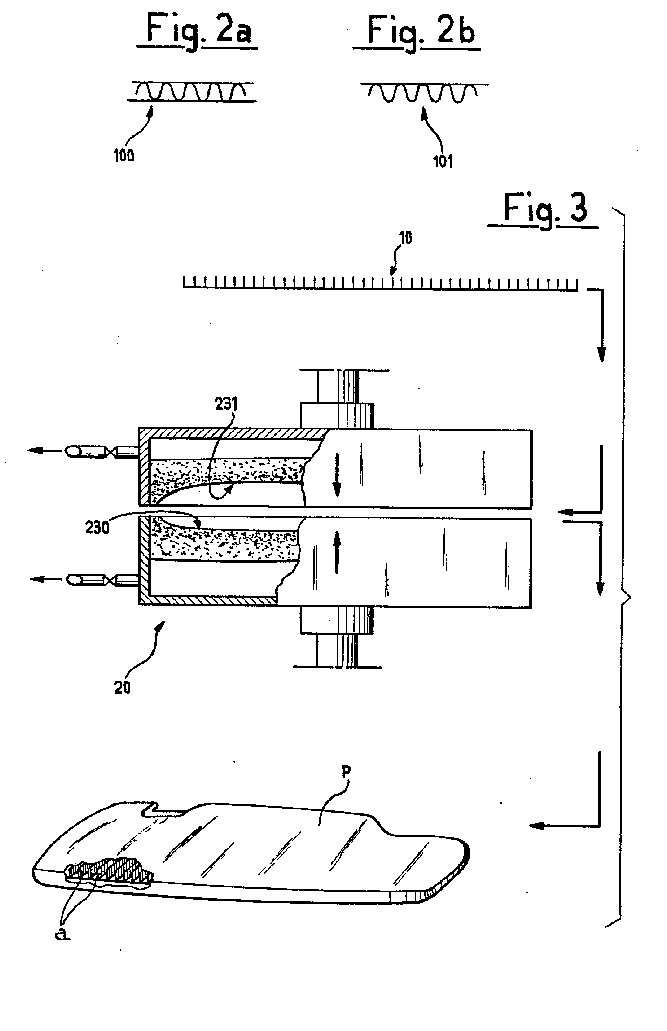

With reference to Figures 1 and 2, the numeral 10 designates a piece cut from a cell sheet of a thermoformable material, e.g. polypropylene, having an overall thickness in the 20 to 100 tenths of a millimeter range.

The sheet 10 is of a type having continuous rectilinear cells $a$ defined by corresponding continuous walls $s$ sandwiched between two surface layers $f_1$-$f_2$; said sheet being manufactured continuously, e.g. by an extrusion process.

According to the invention, the piece 10, cut to the size of the panel, or general interior work member to be produced, with small peripheral excess to permit clamping in the mould, is transported to a mould 20 of the microporous structure type.

That mould comprises a sealed box 21 including a microgranular body 22 on which the active moulding surface 23 is formed. Advantageously the body 22 has a differentiated grain size which decreases toward the active surface 23; the values of the grain size gradient ranging from about 2,000 to 50 microns. That body may be fabricated in any conventional manner and preferably from a layered mix of powder aluminum and a binder comprising epoxy resin. Within the box 21 a vacuum is created through a conduit 24 connected to a corresponding pump (not shown), the steady state vacuum level being in the 600 to 650 mmHg. In the mould, after closing the cover which engages the piece peripheral edges in clamping relationship, the piece 10, as heated to about 170°C, undergoes surface

forming thanks to the action of the vacuum propagating to the forming surface 23 owing to the porous character of the body 22. Upon completion of the forming step, the piece is withdrawn and after edge trimming it appears in its final product form indicated at 30 in Figure 1. As may be seen in the figure, the final product -- be it a panel or interior work member -- has the exposed surface 31 formed with the desired decorative raised pattern, e.g. a pattern simulating the texture of fabric, or a lath of fabric strips, or any other surface pattern of any desired covering. In particular, owing to the surface grain size of the mix 22 allowing a detailed reproduction of microraised surface motifs, it is possible to reproduce on the exposed surface the surface features which mark the imitation hide usually prepared with a calendering process. Still present and structurally unaltered in the final product, together with said surface pattern, the cells a of the original sheet 10, so that the final product will retain all of the strength, heat and sound insulation properties of said original sheet.

In the example of Figure 1, a sheet has been represented which has parallel cells a, but it will be apparent that such a structure would not be limitative to the invention. Figures 2a and 2b illustrate, for example, other possible structures for the starting sheet of the corrugated type, respectively sandwiched 100 and plain 101. The advantage of using cell sheets of the type shown resides in the possibility thus afforded of manufacturing them by continuous drawing, but if required, closed cell sheets, e.g. of the so-called honeycomb type, may be formed with the method of this invention.

Figure 3 illustrates the same manufacturing method as Figure 1, but applied to the manufacture of sun visors for motorvehicles. In this case, the mould 20 is provided with two juxtaposed die-type half-moulds 200-201 which are both provided with microporous forming surfaces 230-231 and both subjected to vacuum action. Also in this case, the cell piece 10 of suitable dimensions is introduced into the mould as heated to about 170°C. After suitable softening, it is subjected to the vacuum action, which forms both surfaces by imparting them with the desired surface finish. Following withdrawal and die-cutting of the peripheral clamping edge, the resulting final product is a sun visor P having the cell structure shown in the figure.

If desired, the raised pattern surface or surface formed otherwise with the inventive method, may be flocked after applying a thin layer of an adhesive thereto, the flocking being carried out in any conventional way, e.g. rain-like with the aid of an electrostatic field, using natural and/or synthetic fibres.

Of course, within the same principle, the embodiments and constructional details of the invention may be amply modified with respect to all that has been described and illustrated by way of example and not of limitation, without departing from the scope of this invention.

CLAIMS

1. A self-supporting polymeric material, particularly for fabricating motorvehicle interior panels, roof- panels and works,      characterized in that it has a cell structure defined by continuous cells and discontinuous ones, and at least a continuous surface layer $(f_1, f_2)$ with decorative raised elements obtained by thermoforming under vacuum.

2. A material according to Claim 1, characterized in that it comprises a cell sheet (10) of polypropylene having at least one exposed surface $(f_1, f_2)$ with decorative raised patterns, in particular patterns reproducing the texture of fabric, imitation hide, and in general surface coverings.

3. A material according to Claims 1 and 2, characterized in that it has continuous parallel cells (a) sandwiched between two surface layers $(f_1, f_2)$ at least one whereof has decorative raised and/or microraised patterns.

4. A material according to Claims 1 and 2, characterized in that it has continuous corrugated cells cooperating with at least one surface layer having decorative raised and/or microraised patterns.

5. A material according to the preceding claims, characterized in that it has honeycomb-like cells or closed cells cooperating with at least one surface layer having decorative raised and/or microraised patterns.

6. A method for manufacturing a material according to Claims 1 to 4, characterized in that it comprises the steps of subjecting at least one face of a polymeric cell thermoformable material sheet to the combined action of a vacuum and heat in microporous structure moulds capable of reproducing on the surfaces of the material being treated covering patterns and/or raised decorative elements in general.

7. A method according to Claim 6, wherein the thermoformable polymeric material sheet is of the type having continuous rectilinear cells and being obtained by an extrusion process.

8. A method according to Claims 6 and 7, for manufacturing motorvehicle panels or interior works, characterized in that it comprises the steps of:
- severing   a continuous cell polymeric sheet into pieces of slightly larger size than the final product such as to define a peripheral region for clamping the piece,
- introducing said piece into a microporous mould having a forming surface for the corresponding panel surface,
- applying heat and a vacuum to the mould in such a way as to thermoform the exposed surface of the panel,
- withdrawing and die-cutting the final product.

9. A method according to Claims 6 and 7 for manufacturing motorvehicle sun visors, characterised in that it comprises the steps of:
- severing   a   continuous cell polymeric sheet into pieces of slightly larger size than the final product such as to define a peripheral region for clamping said piece,
- introducing said piece into a juxtaposed die micro-

0081781

porous mould having forming surfaces for the corresponding sun visor surfaces,

- applying heat and a vacuum to both of the mould dies for thermoforming both the surfaces of the sun visor,

- withdrawing and die-cutting the final sun visor product.

10. A method according to Claims 6,7 and 8, characterised in that it comprises the additional step of flocking the thermoformed surfaces of the final product after the withdrawal thereof and the application of an adhesive layer to said surfaces.

11. A motorvehicle panel fabricated from the material and with the method according to the preceding claims, characterised in that it has a continuous cell structure with at least one surface layer carrying raised and/or microraised patterns in general with a decorative character obtained by vacuum thermoforming.

12. A roof panel for motorvehicles fabricated from the material and with the method according to the preceding claims, characterized in that it has a continuous cell structure with at least one surface layer having raised and/or microraised patterns in general with a decorative character obtained by vacuum thermoforming.

13. A sun visor for motorvehicles fabricated from the material and with the method according to the preceding claims, characterised in that it has a continuous cell structure delimited by surface layers having both decorative raised and/or microraised patterns in general obtained by vacuum thermoforming.

Fig. 1

0081781

## Fig. 2a

100

## Fig. 2b

101

## Fig. 3

10

231

230

20

P

a